# NEUE EUROPÄISCHE PATENTSCHRIFT

(11) **EP 0 942 057 B2**
(45) Veröffentlichungstag und Bekanntmachung des Hinweises auf die Entscheidung über den Einspruch: **24.12.2008**
(45) Hinweis auf die Patenterteilung: 16.01.2002
(21) Anmeldenummer: 99104802.6
(22) Anmeldetag: 11.03.1999
(51) Int. Cl.: C09J 7/04, D04H 3/16, D04H 1/46

(54) **Klebeband zur Bündelung von Kabeln**
Adhesive tape for bundling cables
Ruban adhésif pour faisceau de cables

(30) Priorität: 12.03.1998 DE 29804431 U; 27.10.1998 DE 29819014 U
(43) Veröffentlichungstag der Anmeldung: 15.09.1999
(60) Teilanmeldung: 01105212.3
(73) Patentinhaber: certoplast Vorwerk & Sohn GmbH, 42285 Wuppertal (DE)
(72) Erfinder: Rambusch, Peter, 42115 Wuppertal (DE); Mundt, Stefan Dr., 40593 Düsseldorf (DE)
(74) Vertreter: Nunnenkamp, Jörg

(56) Entgegenhaltungen:
- EP-A- 0 995 782
- EP-A- 0 995 783
- DE-A- 19 523 494
- DE-U- 9 401 037
- DE-U- 29 706 342
- DE-U- 29 819 014
- US-A- 5 629 078
- US-A- 5 631 073
- JOACHIM LÜNENSCHLOSS, WILHEM ALBRECHT: 'Vliesstoffe', 1982, GEORG THIEME VERLAG, STUTTGART Seiten 48 - 230
- NEUMÜLLER OTTO-ALBRECHT: 'Römpps Chemie-Lexikon', Bd. 2 CM-G, 1981, FRANCKH, STUTTGART Seite 1032F

## Beschreibung

Die Erfindung betrifft ein Klebeband, insbesondere Wickelband zur Bündelung von Kabeln in Automobilen, mit einem bandförmigen Vliesträger, und mit einer ein- oder beidseitig aufgebrachten Kleberbeschichtung.

Ein derartiges Klebeband ist beispielsweise durch die EP-B 0 668 336 oder die DE-U 94 01 037 bekannt geworden. Dabei wird jeweils ein als Nähvlies ausgebildeter bandförmiger Vliesträger angesprochen. Bei einem solchen Nähvlies ist das Vliesmaterial aus einer Vielzahl parallel zueinander verlaufender eingenähter Nähte gebildet. Vergleichbare Nähwirkverfahren sind auch in Verbindung mit sogenannten Maliwatt-Nähgewirken bekannt. An dieser Stelle sei nur beispielhaft auf ein Klebeband auf Basis eines Malivlieses hingewiesen, wie es durch die DE-C 44 42 093 vorbeschrieben ist. Auch kennt man Vliesträger vom Typ Kunitvlies oder Mulikunitvlies aus DE-C 44 42 507.

Ferner lehrt die DE-A 195 23 494 bei einem Klebeband auf Spinnvliesbasis zur Bandagierung von Kabelbäumen auf ein Spinnvlies aus Polypropylen zurückzugreifen. Hierdurch versucht man insbesondere die Handhabung des beschriebenen Klebebandes im Hinblick auf ein Handeinreißen zu verbessern.

Der Stand der Technik lässt insgesamt zwei Entwicklungslinien zur Verfestigung eines Vliesträgers erkennen. Zum einen wird auf aufwendige Verfestigungsmethoden zurückgegriffen, wofür das Nähvlies ein typischer Vertreter ist. Zum anderen hat man bei der DE-A 195 23 494 bewusst auf ein Klebeband aus Spinnvliesen auf der Basis von Polypropylen gesetzt, um die nötige Festigkeit - auch ohne Nähfaden - erreichen zu können. Hierdurch wird zwar ein sortenreines Ausgangsmaterial für das Recycling zur Verfügung gestellt, allerdings ist dies mit dem Nachteil verbunden, dass sich mit Spinnvliesstoffen aus Polypropylen regelmäßig nur begrenzte Festigkeiten eines hieraus hergestellten Klebebandes realisieren lassen. Dies wird bei der bekannten Lehre zwar als Vorteil insofern herausgestellt, als hierdurch die Handhabung der Klebebandrolle, insbesondere die Handeinreißbarkeit, deutlich verbessert sein soll. Dies wird allerdings mit dem vorerwähnten Nachteil der verringerten Festigkeit erkauft.

Im übrigen lässt sich Polypropylen (wie auch Polyethylen) relativ schwer ohne geeignete Vorbehandlung mit Kleber benetzen. Dies kann auf den unpolaren Charakter der vorerwähnten Materialien im Vergleich zu den hauptsächlich als Kleber eingesetzten Komponenten zurückgeführt werden. Bedeutender ist jedoch, dass Polypropylen eine im Vergleich zu anderen Kunstfasern geringere Verrottungsfestigkeit aufweist und die Temperaturstabilität für den speziellen Einsatz im Automobilbereich nicht optimal ist.

Neben den vorerwähnten mechanischen Verfestigungsverfahren für Faservlies sind auch reine Vernadelungstechniken (ohne Einbringen eines Nähfadens wie beim Nähvlies) bekannt, bei welchen durch senkrechten Einstich einer Vielzahl von mit Widerhaken versehener Nadeln der Faserstoff zu einem Filz bzw. Vlies verfestigt wird. Derartige Techniken haben bisher in die Klebebandherstellung keinen Eingang gefunden.

Neben dem generellen Nachteil der aufwendigen Herstellung bei den bekannten Wickelbändern auf Basis eines Nähvlieses besteht bei derartigen Vliesen darüber hinaus die Gefahr, dass insbesondere nach einer längeren Lagerung des Klebebandes einzelne Fasern aus der darunter befindlichen Oberfläche des Nähvliesträgers herausgezogen werden und an der Kleberbeschichtung haften bleiben können. Dies führt einer Beeinträchtigung der Klebewirkung. Im übrigen besteht bei Nähvliesen die Gefahr, dass sogenannte "Laufmaschen" gebildet werden. Dadurch wird bei starker Beanspruchung des Vliesträgers bzw. des Nähvliesträgers der gesamte Nähvliesverbund zerstört.

Der Stand der Technik mit den bekannten Vliesträgern auf Nähvliesbasis einerseits und auf Spinnvliesbasis aus Polypropylen andererseits kann aufgrund der vorstehend beschriebenen Schwierigkeiten nicht in allen Punkten befriedigen.

Dies gilt auch für die US-A 5 631 073, welche ein Klebeband mit wasserstrahlvernadeltem Vliesträger offenbart.

Schließlich sei noch das deutsche Gebrauchsmuster DE 297 06 343 U1 in Bezug genommen, welches ein Klebeband mit einem bandförmigen Träger aus Polyesterfasern offenbart. Bei diesem Träger handelt es sich im allgemeinen um ein Gewebe, welches schwierig zu handhaben ist.

Der Erfindung liegt das technische Problem zugrunde, ein Klebeband, insbesondere Wickelband zur Bündelung von Kabeln in Automobilen, der eingangs beschriebenen Ausführungsform so weiterzubilden, dass bei verminderter Reißdehnung die Haftung der Klebebeschichtung und damit die Herstellung vereinfacht ist und zugleich eine besondere Eignung für den Automobilbereich erreicht wird.

Zur Lösung dieser Aufgabe ist Gegenstand der Erfindung die Verwendung eines Klebebandes, mit einem bandförmigen Spinnvliesträger auf Polyesterbasis und mit einer ein- oder beidseitig aufgebrachten Kleberbeschichtung, wobei die Reißdehnung des Spinnvliesträgers unterhalb von 50 % liegt, als Wickelband zur Bündelung von Kabeln und Automobilen. Vorzugsweise bewegt sich die Reißdehnung des Spinnvliesträgers im Bereich zwischen 10 % und 30%.

Dabei wird der Spinnvliesträger im allgemeinen mittels eines Kalanders kalt oder thermisch verfestigt und geprägt. Bei einem thermischen Kalander spielen die Temperatur einer zugehörigen Prägewalze, der auf das Spinnvlies im Spalt zwischen entsprechenden Walzen ausgeübte Druck und die Geschwindigkeit, mit welcher das Spinnvlies einen Walzenspalt passiert, eine entscheidende Rolle. Die Prägewalze kann ein Kreuzgewölbe aufweisen. Ihre Temperatur liegt regelmäßig im Bereich von ca. 150°C bis 200°C. Die auf diese Weise erreichbare Prägefläche, d.h. letztlich die Anzahl der Schmelzpunkte pro Flächeneinheit, bemisst sich hauptsächlich zu 10 % bis 50 %, vorzugsweise 30 %.

Durch die Verwendung von einzig Polyester für den Spinnvliesträger wird zunächst einmal eine einfache Wiederver wertbarkeit des beschriebenen Klebebandes ermöglicht, weil der Spinnvliesträger insofern sortenrein ausgebildet ist.

Im übrigen ist die Herstellung besonders einfach und kostengünstig, weil auf zusätzliche Parallelnähte aus einem anderen Material, wie bei einem Nähvlies obligatorisch, verzichtet wird. Dennoch besitzt der bandförmige Vliesträger aus dem Polyester-Spinnvlies bzw. dem Spinnvlies unter Verwendung von Polyesterfilamenten eine ausreichende Reißkraft bzw. Reißfestigkeit. Diese liegt jedenfalls deutlich über der bei Verwendung von Polypropylen anstelle von Polyester (vgl. DE-A 195 23 494, wo die Reißkraft maximal im Bereich bis ca. 55 N/cm angesiedelt ist).

Dennoch wird die Handhabbarkeit, insbesondere die Handeinreißfähigkeit, nicht wesentlich verschlechtert. Vielmehr werden Reißfestigkeiten bzw. Reißkräfte erzielt, die denen von Klebebändern mit aufwendig hergestelltem Vliesträger entsprechen (vgl. EP-B 0 668 336). Es lassen sich praktisch gewebeähnliche Eigenschaften erreichen.

Im Ergebnis werden zumindest die mechanischen Eigenschaften wie bei einem Klebeband mit Nähvliesträger erreicht (EP-B-0 668 336), und zwar bei demgegenüber reduzierten Herstellungskosten und zugleich einwandfreier Wiederverwertbarkeit (vgl. DE-A 195 23 494). Durch die Heißkalandrierung mittels Prägewalzen mit üblicherweise Kreuzgewölbe wird ein Flusenübertrag auf die Kleberbeschichtung beim Abrollen zuverlässig verhindert. Außerdem sorgt die Verwendung des Polyesters für eine besonders gute Verrottungsfestigkeit sowie Temperaturstabilität bis in Bereiche von ca. 190 °C. Dementsprechend werden deutliche Vorteile gegenüber einem Spinnvlies aus Polypropylen erreicht.

Bei dem im Rahmen der Erfindung eingesetzten Spinnvlies aus Polyester handelt es sich um ein solches, welches durch herkömmliche Schmelzspinnverfahren erzeugt wurde. Dabei wird zunächst Rohmaterial, d.h. z.B. Polyesterschnitzel, kristallisiert, getrocknet und anschließend das geschmolzene Polymer (Polyester) so weit erhitzt, dass es die zur Verspinnung geeignete Viskosität besitzt. In diesem Zustand wird das geschmolzene Polymer mit einer volumetrischen Pumpe extrudiert. Nach Durchlaufen eines Filters wird das Polymer bzw. Polyester durch Spinndüsen ausgestoßen, wobei die dabei gebildeten vielen Filamente (mittels Luft) verstreckt und einem Ablegesystem zugeführt werden. Dabei erreicht die Geschwindigkeit der Filamente ein Mehrfaches der Ausstoßgeschwindigkeit.

Im einzelnen erfolgt das Strecken der Filamente üblicherweise durch einen freien Luftstrom, welcher parallel mit ihnen von der Spinndüse aus abwärts gerichtet ist und die Fasern mitreißt. Jedenfalls werden die Filamentbündel nach der Verstreckung mit Hilfe einer Platte abgelenkt. Durch diese Platte erfolgt die Ablage der Filamente auf ein perforiertes Endlosband, auf welchem das gebildete Vlies durch Ansaugen festgehalten und einer Verfestigungszone zugeführt wird. Die Verfestigung der Vliese kann mit Hilfe mechanischer Verfahren, durch Anwendung von Druck und Wärme oder auch mittels chemischer Methoden (Bindemittel) erfolgen. Vorliegend erfolgt eine Verfestigung des Vlieses auf thermischem Wege, und zwar dergestalt, dass die aus der Spinndüse ausgetretenen, noch plastischen, Fasern verklebt werden, nämlich durch Heißkalandrieren. Eine solche thermische Verfestigung erfolgt dementsprechend mittels Kalandern zwischen zwei beheizten Zylindern bzw. Prägewalzen bei entsprechendem Druck.

Jedenfalls entspricht die Kristallinität und Orientierung von Polyesterfilamenten für Spinnvliese meistens den Werten, die herkömmliche textile Polyesterfasern besitzen. Dementsprechend lässt sich der Vliesträger aus Polyester auch in ähnlicher Weise verarbeiten, beispielsweise Färben oder auch Bedrucken. Das Widerstandsvermögen gegen organische Lösungsmittel ist ausgezeichnet, so dass die besonders im Motorraum eines Kraftfahrzeuges herrschenden rauhen Bedingungen problemlos beherrscht werden. Durch die geringe Feuchtigkeitsaufnahme von Vliesträgern bzw. Spinnvliesstoffen aus Polyester ist eine dimensionsstabile Bündelung von Kabeln möglich, und zwar unabhängig von den äußeren Bedingungen. Tatsächlich sind die physikalischen Eigenschaften im trockenen und nassen Zustand gleich. Hinzu kommt eine gute Wärmebeständigkeit derartiger Vliesträger, die für den aufgezeigten Einsatzzweck von besonderer Bedeutung ist.

Um das Alterungsvermögen bzw. Festigkeitsverluste durch direkte Sonneneinstrahlung zu verringern, ist der Zusatz handelsüblicher UV-Stabilisatoren möglich. Dies gilt auch für die Beimengung von vorzugsweise Ammoniumpolyphosphat, welches zu einer flammfesten Ausrüstung des Klebebandes führt. - Beide Maßnahmen können mit Erfolg natürlich auch bei einem wasserstrahl- und/oder luftvernadelten Vlies ergriffen werden.

Die Verarbeitbarkeit und insbesondere die Produktqualität des Klebebandes hinsichtlich des äußeren Erscheinungsbildes ist hervorragend, weil Spinnvliesstoffe aus Polyester wegen ihrer isotropen Struktur keine Tendenz zeigen, auszufransen. Folglich müssen die Schnittflächen nicht weiter verstärkt oder angeschmolzen werden, welches weitere Kostenvorteile bei der Herstellung nach sich zieht. Im übrigen eignet sich das erfindungsgemäße Klebeband wegen des besonderen elektrischen Widerstandsvermögens des Vliesträgers aus Polyester auch zur Bündelung und Isolierung von (Hochspannungs-)Kabeln im Kraftfahrzeug, beispielsweise im Zusammenhang mit der Zündanlage.

Durch das relativ geringe Flächengewicht des erfindungsgemäß eingesetzten Spinnvliesträgers aus Polyester reduziert sich bei gleicher Lauflänge das Gewicht einer Klebebandrolle gegenüber Klebebändern aus anderen Vliesen, insbesondere Nähvliesen. Folglich ist die Handhabung beim Umwickeln von Kabelbäumen erleichtert. Gleichzeitig wird am fertigen Kabelbaum eine Gewichtsersparnis erreicht.

Bleibt schließlich noch darauf hinzuweisen, dass der Polyester-Spinnvliesträger nach der Erfindung prinzipiell mit allen üblichen Vorrichtungen und nach bekannten Verfahren (mit einer Appretur) beschichtet werden kann. In diesem Zusammenhang lassen sich glattere Oberflächen erzielen, wenn dies gewünscht sein sollte. Im allgemeinen erfolgt das Beschichten meist aus wässrigen Lösungen, wobei hierfür z.B. Acryl-, Vinyl-, Protein- oder acetylierte Stärkebinder, aber auch andere Dispersionen zum Einsatz kommen können.

Beschichtungen aus Lösungsmitteln lassen sich erfolgreich mit Pyroxylin und Vinylchloridbindern durchführen. Auch eine Laminierung mit anderen Materialien ist möglich, wobei die Auswahl von Adhäsivstoffen groß ist. Sofern ein Maximum an Adhäsion gewünscht wird, erfolgt oft eine Rückenbeschichtung mit Latex oder Acrylharzen. - Dadurch, dass derartige Beschichtungen üblicherweise polar sind, lassen sich gute Haftungseigenschaften auf dem ebenfalls polaren Polyester-Vliesträger erzielen.

Im Ergebnis zeichnet sich der Polyester-Spinnvliesträger durch eine glatte Oberfläche, hervorragende Festigkeitseigenschaften und eine einfache Herstellung sowie Wiederverwertbarkeit aus, so dass die beschriebene Ausgestaltung für den primären Einsatzzweck (im Automobilsektor) besonders prädestiniert ist.

Weitere vorteilhafte Ausgestaltungen werden im folgenden beschrieben. So weist der Spinnvliesträger üblicherweise eine Dicke von 0,2 bis 0,5 mm, vorzugsweise ca. 0,3 mm, auf. Sein Flächengewicht beträgt im allgemeinen 60 bis 120 g/m², vorzugsweise ca. 70g/m². Die Reißkraft des Spinnvliesträgers ist größtenteils in einem Bereich von 30 bis 100 N/cm, vorzugsweise mehr als 40 N/cm, angesiedelt. Die Abrollkraft ist durch die Oberflächenstruktur des Spinnvliesträgers in engen Grenzen einstellbar und erfährt im Gegensatz zu herkömmlichen Trägermaterialien, insbesondere aus Gewebe, bei der Lagerung nur noch minimale Änderungen. Insofern wird im Rahmen der Erfindung auch die Lagerfähigkeit und damit die erzielbare Lagerdauer deutlich verbessert.

Durch den Zusatz eines Flammschutzmittels, z.B. Ammoniumpolyphosphat, oder die Verwendung eines modifizierten Polyesterwerkstoffes, lässt sich das Klebeband flammfest ausrüsten. Ein solcher modifizierter Polyesterwerkstoff weist gleichsam ein in die Molekülstruktur eingebundenes Flammschutzmittel auf, welches bei entsprechender Temperatur frei wird und die gewünschte (feuerhemmende) Wirkung freisetzt. Um das Alterungsvermögen bzw. Festigkeitsverluste durch direkte Sonneneinstrahlung zu verringern, ist darüber hinaus der Zusatz handelsüblicher UV-Stabilisatoren denkbar. Schließlich kann der Spinnvliesträger eine ein- oder beidseitige Lackschicht oder Appreturschicht als Kaschierung aufweisen, um die Haftung der hierauf aufgebrachten Kleberbeschichtung zu verbessern. In diese Richtung zielen auch Maßnahmen zur Oberflächenprägung.

Durch den sich insbesondere bei der Verwendung von Polyester einstellenden hohen elektrischen Widerstand des Spinnvliesträgers bietet sich das erfindungsgemäße Klebeband zur Bündelung und Isolierung von (Hochspannungskabeln) im Kraftfahrzeug, beispielsweise im Zusammenhang mit der Zündanlage, an. Infolge des relativ geringen Flächengewichtes wird bei gleicher Lauflänge im Vergleich zum Stand der Technik das Gewicht einer Klebebandrolle reduziert, so dass die Handhabung beim Umwickeln von Kabelbäumen erleichtert ist. Gleichzeitig wird am fertigen Kabelbaum eine Gewichtsersparnis erreicht. Schließlich kann der Spinnvliesträger eine ein- oder beidseitige Prägung aufweisen.

Die Feinheit des Polyester-Spinnvlieses kann im Bereich zwischen 1 bis 8 dtex, vorzugsweise 1,5 bis 3,5 dtex, liegen. Schließlich handelt es sich bei der Kleberbeschichtung im Regelfall um eine druckempfindliche Haftklebemasse auf Basis von z.B. Kautschuk oder Polyacrylat mit oder ohne Lösungsmittel. Hier macht sich die Erfindung die Tatsache zunutze, dass derartige Kleberbeschichtungen im allgemeinen polar sind und mit dem ebenfalls polaren Spinnvlies auf Polyesterbasis einen besonders innigen Haftverbund bilden.

### Beispiel

Auf einen Spinnvliesträger aus Polyester mit einem Flächengewicht von 70 g/m² wird im Rakel- oder Düsenverfahren eine Kleberbeschichtung aufgetragen. Die Rückseite des Spinnvliesträgers kann zuvor oder gleichzeitig in einem Auftragswerk mit einer Appretur (oder auch einem Lack) beschichtet worden sein.

Im Anschluss hieran wird das Produkt getrocknet und zu Ballen aufgewickelt. Abschließend erfolgt die Konfektionierung jeweiliger Klebebänder nach der gewünschten Vorgabe.

## Patentansprüche

1. Verwendung eines Klebbandes, mit einem bandförmigen Spinnvliesträger auf Polyesterbasis, und mit einer ein- oder beidseitig aufgebrachten Kleberbeschichtung, wobei die Reißdehnung des Spinnvliesträgers unterhalb von 50 % liegt, als Wickelband zur Bündelung von Kabeln in Automobilen.

2. Verwendung nach Anspruch 1, **dadurch gekennzeichnet, dass** der Spinnvliesträger eine Dicke von 0,2 bis 0,5 mm vorzugsweise ca. 0,3 mm aufweist.

3. Verwendung nach Anspruch 1 oder 2, **dadurch gekennzeichnet, dass** das Flächengewicht des Spinnvliesträgers 60 bis 120 g/m², vorzugsweise ca. 70 g/m², beträgt.

4. Verwendung nach einem der Ansprüche 1 bis 3, **dadurch gekennzeichnet, dass** die Reißkraft bzw. Reißfestigkeit des Spinnvliesträgers in einem Bereich von 30 bis 100 N/cm liegt, vorzugsweise größer als 40 N/cm ist.

5. Verwendung nach einem der Ansprüche 1 bis 4, **dadurch gekennzeichnet, dass** die Reißdehnung des Spinnvliesträgers zwischen 10 % und 30 % liegt.

6. Verwendung nach einem der Ansprüche 1 bis 5, **dadurch gekennzeichnet, dass** es durch Zusatz eines Flammschutzmittels, z.B. Ammoniumpolyphosphat, oder durch Einsatz eines modifizierten Polyesterwerkstoffes, flammfest ausgebildet ist.

7. Verwendung, nach einem der Ansprüche 1 bis 6, **dadurch gekennzeichnet, dass** der Spinnvliesträger eine ein- oder beidseitige Appretur- bzw. Lackschicht aufweist.

## Claims

1. Use of an adhesive tape, comprising a polyester-based spun felt backing in the form of a tape, and comprising an adhesive coating applied to one or both sides, wherein the elongation at tear of the spun felt is less than 50 % as a winding tape for the bundling of cables in automobiles.

2. Use according to claim 1, **characterised in that** the spun felt backing has a thickness of 0,2 to 0,5 mm, preferably about 0,3 mm.

3. Use according to claims 1 or 2, **characterised in that** the weight per unit area of the spun felt backing is 6 to 120 g/m², preferably about 70 g/m².

4. Use according to any one of claims 1 to 3, **characterised in that** the tensile strength or resistance to tearing of the spun felt backing falls within the range from 30 to 100 N/cm, and is preferably greater than 40 N/cm.

5. Use according to any one of claims 1 to 4, **characterised in that** the elongation at tear of the spun felt backing is between 10 % and 30 %.

6. Use according to any one of claims 1 to 5, **characterised in that** it is made flame-resistant it by the addition of a flame retardant, e.g. ammonium polyphosphate, or by the use of a modified polyester material.

7. Use according to any one of claims 1 to 6, **characterised in that** the spun felt backing comprises a dressing layer of lacquer layer on one or both sides.

## Revendications

1. Utilisation d'un ruban adhésif, ayant un support en non tissé de filage sous forme de ruban à base de polyester et un revêtement de colle appliqué sur une ou sur les deux faces, pur lequel l'élongation à la rupture du support en non tissé de filage se situe en dessous de 50 % en bande d'enroulement pour faisceau de câbles dans le automobiles.

2. Utilisation selon la revendication 1, **caractérisé en ce que** le support en non tissé de filage possède une épaisseur de 0,2 à 0,5 mm, de préférence environ 0,3 mm.

3. Utilisation selon la revendication 1 ou 2, **caractérisé en ce que** le poids surfacique de support en non tissé de filage s'élève à de 60 à 120 g/m² préférence à environ 70 g/m².

4. Utilisation selon la revendication 1 à 3, **caractérise en ce que** la résistance à la rupture ou la solidité à la déchirure du support en non tissé de filage se situe dans une zone allant de 30 à 100 N/cm, de préférence est supérieure à 40 N/cm.

5. Utilisation selon la revendication 1 à 4, **caractérise en ce que** l'élongation à la rupture du support en non tissé de filage se situe entre 10 et 30 %.

6. Utilisation selon la revendication 1 à 5, **caractérise en ce qu**' il est formé résistant à la flamme par addition d'un produit ignifuge par exemple du polyphosphate d'ammonium, ou par mise en oeuvre d'un matériau en polyester modifié.

7. Utilisation selon la revendication 1, **caractérise en ce que** le support en non tissé de filage possède une couche d'apprêtage ou une couche de laque sur une ou sur les deux faces.
